# EUROPÄISCHE PATENTSCHRIFT

(11) **EP 0 864 591 B1**
(45) Veröffentlichungstag und Bekanntmachung des Hinweises auf die Patenterteilung: **12.06.2002**
(21) Anmeldenummer: 98103998.5
(22) Anmeldetag: 06.03.1998
(51) Int. Cl.: C08F 110/06, C08F 4/658, C08F 4/02

(54) **Verfahren zu herstellung von hochkristallinen Propylenhomopolymerisaten**
Process for producing high crystalline propylene homopolymers
Procédé de préparation d' homopolymères de propylène hautement cristallins

(30) Priorität: 14.03.1997 DE 19710761
(43) Veröffentlichungstag der Anmeldung: 16.09.1998
(73) Patentinhaber: Basell Poliolefine Italia S.p.A., 20124 Milano (IT)
(72) Erfinder: Hüffer, Stephan, Dr., 67071 Ludwigshafen (DE); Rösch, Joachim, Dr., 67063 Ludwigshafen (DE); Seelert, Stefan, Dr., 67227 Frankenthal (DE); Langhauser, Franz, Dr., 67152 Ruppertsberg (DE); Lilge, Dieter, Dr., 67117 Limburgerhof (DE); Hingmann, Roland, Dr., 68526 Ladenburg (DE); Schweier, Günther, Dr., 67159 Friedelsheim (DE)
(74) Vertreter: Colucci, Giuseppe

(56) Entgegenhaltungen:
- EP-A- 0 497 590
- EP-A- 0 657 477
- EP-A- 0 712 869
- EP-A- 0 761 696
- EP-A- 0 812 861
- EP-A- 0 829 490
- DE-A- 4 242 486

## Beschreibung

Die vorliegende Erfindung betrifft ein Verfahren zur Herstellung von Propylenhomopolymerisaten, die dadurch charakterisiert sind, daß bei ihrer Auftrennung nach Taktizität, indem man die Polymerisate zunächst in siedendem Xylol löst, anschließend die Lösung mit einer Kühlrate von 10°C/h auf 25°C abkühlt und dann bei steigender Temperatur die Propylenhomopolymerisate in Fraktionen unterschiedlicher Taktizität auftrennt, entweder eine oder mehrere der Bedingungen, daß
i) der Anteil der Propylenhomopolymerisate, der bei Erwärmen der abgekühlten Propylenhomopolymerisatlösung auf eine Temperatur von 112°C ungelöst bleibt, größer 20 Gew.-% ist oder
ii) der Anteil der Propylenhomopolymerisate, der bei Erwärmen der abgekühlten Propylenhomopolymerisatlösung auf eine Temperatur von 117°C ungelöst bleibt, größer 8 Gew.-% ist oder
iii) der Anteil der Propylenhomopolymerisate, der bei Erwärmen der abgekühlten Propylenhomopolymerisatlösung auf eine Temperatur von 122°C ungelöst bleibt, größer 1 Gew.-% ist,
erfüllt werden.

Katalysatorsysteme vom Typ der Ziegler-Natta-Katalysatoren sind u.a. aus der DE-A 42 16 548, der DE-A 44 19 438, der EP-A 530 599 und der US-A 4 857 613 bekannt. Diese Systeme werden insbesondere zur Polymerisation von C₂-C₁₀-Alk-1-enen verwendet und enthalten u.a. Verbindungen des mehrwertigen Titans, Aluminiumhalogenide und/oder -alkyle, sowie Elektronendonorverbindungen, insbesondere Siliciumverbindungen, Ether, Carbonsäureester, Ketone und Lactone, die einerseits in Verbindung mit der Titankomponente und andererseits als Cokatalysator verwendet werden.

Die Herstellung der Ziegler-Natta-Katalysatoren geschieht üblicherweise in zwei Schritten. Zuerst wird die titanhaltige Feststoffkomponente hergestellt. Anschließend wird diese mit dem Cokatalysator umgesetzt. Mit Hilfe der so erhaltenen Katalysatoren wird anschließend die Polymerisation durchgeführt.

In der US-A 4 857 613 und der US-A 5 288 824 werden Katalysatorsysteme vom Typ der Ziegler-Natta-Katalysatoren beschrieben, die neben einer titanhaltigen Feststoffkomponente und einer Aluminiumverbindung noch organische Silanverbindungen als externe Elektronendonorverbindungen aufweisen. Die dabei erhaltenen Katalysatorsysteme zeichnen sich u.a. durch eine gute Produktivität aus und liefern Polymerisate des Propylens mit einer hohen Stereospezifität, d.h. einer hohen Isotaktizität, einem geringen Chloranteil und einer guten Morphologie, d.h. einem geringen Anteil an Feinstkorn.

Für einige Anwendungsbereiche von Propylenhomopolymerisaten wie beispielsweise für Lebensmittelfolien, die aus derartigen Polymerisaten des Propylens hergestellt werden, oder für die Herstellung dünnwandiger Behälter ist es erforderlich, daß die Propylenhomopolymerisate u.a. nur geringe Anteile an xylollöslichen Anteilen und eine hohe Steifigkeit aufweisen. Solche Polymerisate zeichnen sich besonders durch eine hohe Kristallinität aus. Eine hohe Steifigkeit wird beispielsweise durch einen hohen Anteil an Polymerketten mit langen, fehlerfrei isotaktischen Polymersequenzen erreicht. Darüberhinaus sollten die Propylenhomopolymerisate einen möglichst geringen Chlorgehalt aufweisen, was insbesondere durch eine möglichst hohe Produktivität des Katalysatorsystems erreicht werden kann. Die aus der US-A 4 857 613 und der US-A 5 288 824 bekannten Polymerisate des Propylens erfüllen diese Anforderungen nicht in ausreichendem Maße.

In der noch unveröffentlichten deutschen Patentanmeldung 196 37 370.0 wird ebenfalls ein Ziegler-Natta-Katalysatorsystem beschrieben, welches eine hohe Produktivität und Stereospezifität aufweist und nach einem einfachen und wenig zeitaufwendigen Verfahren hergestellt werden kann.

Der vorliegenden Erfindung lag daher die Aufgabe zugrunde, den geschilderten Nachteilen abzuhelfen und ein Verfahren zur Herstellung von Propylenhomopolymerisaten zu entwickeln, welche u.a. einen niedrigen Gehalt an xylollöslichen Anteilen und einen geringen Chlorgehalt aufweisen und vor allem einen hohen Anteil an Polymerketten mit langen, fehlerfrei isotaktischen Polymersequenzen besitzen, was sich in einem erhöhten Schmelzpunkt, einer gesteigerten Kristallisationsgeschwindigkeit und einer erhöhten Materialsteifigkeit niederschlägt.

Demgemäß wurden das eingangs definierte Verfahren zur Herstellung von Propylenhomopolymerisaten gefunden.

Die mit Hilfe des erfindungsgemäßen Verfahrens erhaltenen Propylenhomopolymerisate zeichnen sich durch einen hohen Anteil an Polymerketten mit langen, fehlerfrei isotaktischen Polymersequenzen aus. Eine Methode, den Anteil von Polymerketten unterschiedlicher Taktizität analytisch zu erfassen, ist die TREF (Temperature Rising Elution Fractionation), bei der die Lösungstemperatur des Polymeranteils dessen mittlerer isotaktischer Sequenzlänge entspricht. Zur Durchführung der TREF werden die Propylenhomopolymerisate zunächst in siedendem Xylol gelöst, anschließend die Lösung mit einer konstanten Kühlrate abkühlt und dann bei steigender Temperatur die Propylenhomopolymerisate in Fraktionen unterschiedlicher Taktizität aufgetrennt. Beschrieben werden kann die Zusammensetzung der Propylenhomopolymerisate durch den Anteil, der beim Erwärmen der abgekühlten Propylenhomopolymerisatlösung auf eine definierte Temperatur ungelöst bleibt.

Die mit Hilfe des erfindungsgemäßen Verfahrens erhaltenen Propylenhomopolymerisate erfüllen entweder eine oder bevorzugt zwei oder alle der folgenden Bedingungen i) bis iii):
i) Der Anteil, der bei Erwärmen der abgekühlten Propylenhomopolymerisatlösung auf 112°C ungelöst bleibt, ist größer 20 Gew.-%, bevorzugt größer 30 Gew.-% und insbesondere größer 40 Gew.-%.
ii) Der Anteil, der bei Erwärmen der abgekühlten Propylenhomopolymerisat auf 117°C ungelöst bleibt, ist größer 8 Gew.-%, bevorzugt größer 12 Gew.-% und insbesondere größer 16 Gew.-%.
iii) Der Anteil, der bei Erwärmen der abgekühlten Propylenhomopolymerisatlösung auf 122°C ungelöst bleibt ist größer 1 Gew.-%, bevorzugt größer 2 Gew.-% und insbesondere größer 3 Gew.-%.

Um erfindungsgemäß die Zusammensetzung der Propylenhomopolymerisate zu bestimmen, wird die TREF in folgender Weise durchgeführt:

1 - 10 g des Propylenpolymerisats werden in soviel siedendem Xylol gelöst, daß eine 0,5- bis 2-gew.-%ige Lösung entsteht. Die siedende Lösung wird dann mit einer linearen Kühlrate im Bereich von 2°C/h bis 15°C/h, bevorzugt mit 10°C/h, auf 25°C oder eine niedrigere Temperatur abgekühlt, wobei der Großteil des Polymerisats ausfällt. Die Kristallsuspension wird nun in eine temperierbare Extraktionsapparatur überführt, die der von W. Holtup in Makromol. Chem. 178, 2335 (1977) beschrieben entspricht, und auf die erste Elutionstemperatur erwärmt. Anschließend werden die Polypropylenkristalle bei dieser Temperatur unter heftiger Durchmischung mindestens 10 Minuten extrahiert. Danach wird die Polymerlösung abgelassen, während die Polymerisatkristalle im Extraktor zurückbleiben. Das gelöste Polymerisat wird in kaltem Aceton (Temperatur < 0°C) ausgefällt, abfiltriert und im Vakuum bis zur Gewichtskonstanz getrocknet.

Der Extraktor wird nun auf die nächste Elutionstemperatur erwärmt und es wird soviel an Xylol der selben Temperatur hinzugegeben, wie auch zum Lösen eingesetzt wurde. Anschließend wird wiederum mindestens 10 Minuten unter heftiger Durchmischung extrahiert, die Polymerlösung abgelassen, das gelöste Polymerisat in kaltem Aceton ausgefällt, abfiltriert und getrocknet. Diese Schritte werden so lange wiederholt, bis sich das gesamte Polymerisat gelöst hat.

Beim erfindungsgemäßen Verfahren wird Propylen polymerisiert in Gegenwart eines Ziegler-Natta-Katalysatorsystems enthaltend als aktive Bestandteile eine titanhaltige Feststoffkomponente a), die durch Umsetzung eines Titanhalogenids mit einer Verbindung des Magnesiums, einem anorganischen Oxid als Träger, einem C₁ bis C₈-Alkanol und einem Carbonsäureester als Elektronendonorverbindung erhalten wird, sowie als Cokatalysatoren eine Aluminiumverbindung b) und eine weitere Elektronendonorverbindung c).

Zur Herstellung der titanhaltigen Feststoffkomponente a) werden als Titanhalogenide die Halogenide des drei- oder vierwertigen Titans, beispielsweise TiBr₃, TiBr₄, TiCl₃ oder TiCl₄, oder Titanalkoxyhalogenide wie Ti(OCH₃)Cl₃, Ti(OC₂H₅)Cl₃, Ti(O-iso-C₃H₇)Cl₃, Ti(O-n-C₄H₉)Cl₃, Ti(OC₂H₅)Br₃, Ti (O-n-C₄H₉)Br₃, Ti(OCH₃)₂Cl₂, Ti(OC₂H₅)₂Cl₂, Ti(O-n-C₄H₉)₂Cl₂, Ti(OC₂H₅)₂Br₂, Ti(OCH₃)₃Cl, Ti(OC₂H₅)₃Cl, Ti(O-n-C₄H₉)₃Cl oder Ti(OC₂H₅)₃Br eingesetzt, wobei die Titanhalogenide, die neben Titan nur Halogen enthalten, und hierbei vor allem die Titanchloride und insbesondere Titantetrachlorid bevorzugt sind. Erfindungsgemäß können die Titanhalogenide auch als Mischungen untereinander oder in Mischungen mit weiteren Titanverbindungen verwendet werden. Als weitere Titanverbindungen kommen beispielsweise Titanalkoholate wie Ti(OCH₃)₄, Ti(OC₂H₅)₄ oder Ti(O-n-C₄H₉)₄ in Betracht. Bevorzugt werden die Titanhalogenide allein verwendet.

Weiter werden bei der Herstellung der titanhaltigen Feststoffkomponente eine oder eine Mischung verschiedener chlorfreier Verbindungen des Magnesiums eingesetzt. Unter chlorfreien Verbindungen des Magnesiums sollen erfindungsgemäß solche verstanden werden, die in ihrer Strukturformel kein Halogen enthalten. Die als Verunreinigungen in den erfindungsgemäßen chlorfreien Verbindungen des Magnesiums enthaltenen Halogenanteile sollten jedoch 5 Gew.-% und insbesondere 2 Gew.-% nicht überschreiten. Als chlorfreien Verbindungen des Magnesiums kommen insbesondere Magnesiumalkyle und Magnesiumaryle, sowie Magnesiumalkoxy- und Magnesiumaryloxyverbindungen in Betracht, wobei bevorzugt Magnesiumdi-(C₁-C₁₀-alkyl)-Verbindungen verwendet werden. Beispiele für erfindungsgemäße chlorfreie Verbindungen des Magnesiums sind Diethylmagnesium, Di-n-propylmagnesium, Di-iso-propylmagnesium, Din-butylmagnesium, Di-sek.-butylmagnesium, Di-tert.-butylmagnesium, Diamylmagnesium, n-Butylethylmagnesium, n-Butyl-sek.-butylmagnesium, n-Butyloctylmagnesium, Diphenylmagnesium, Diethoxymagnesium, Di-n-propyloxymagnesium, Di-iso-propyloxymagnesium, Din-butyloxymagnesium, Di-sek.-butyloxymagnesium, Di-tert.-butyloxymagnesium, Diamyloxymagnesium, n-Butyloxyethoxymagnesium, n-Butyloxy-sek.-butyloxymagnesium, n-Butyloxyoctyloxymagnesium oder Diphenoxymagnesium. Von diesen sind n-Butylethylmagnesium oder n-Butyloctylmagnesium besonders bevorzugt.

Darüberhinaus enthält die titanhaltige Feststoffkomponente a) mindestens ein anorganisches Oxid als Träger. Es wird in der Regel ein feinteiliges anorganisches Oxid als Träger verwendet, welches einen mittleren Teilchendurchmesser von 5 bis 200 µm, bevorzugt von 15 bis 100 µm und insbesondere von 20 bis 70 µm aufweist. Unter dem mittleren Teilchendurchmesser ist hierbei der volumenbezogene Mittelwert (Medianwert) der durch Coulter-Counter-Analyse nach ASTM Standard D 4438 bestimmten Korngrößenverteilung zu verstehen.

Vorzugsweise sind die Teilchen des feinteiligen anorganischen Oxids aus Primärpartikeln zusammengesetzt, die einen mittleren Teilchendurchmesser der Primärpartikel von 1 bis 20 µm, insbesondere von 3 bis 10 µm aufweisen. Bei den sogenannten Primärpartikeln handelt es sich um poröse, granuläre Oxidpartikel, welche im allgemeinen durch Mahlung aus einem Hydrogel des anorganischen Oxids erhalten werden. Es ist auch möglich die Primärpartikeln vor ihrer Weiterverarbeitung zu sieben.

Weiterhin ist das bevorzugt zu verwendende anorganische Oxid auch dadurch charakterisiert, daß es Hohlräume bzw. Kanäle mit einem mittleren Durchmesser von 0,1 bis 20 µm, insbesondere von 1 bis 15 µm, aufweist, deren makroskopischer Volumenanteil am Gesamtpartikel im Bereich von 5 bis 30 %, insbesondere im Bereich von 10 bis 30 %, liegt.

Die Bestimmung der mittleren Teilchendurchmesser der Primärpartikel sowie des makroskopischen Volumenanteils der Hohlräume und ) Kanäle des anorganischen Oxids erfolgt zweckmäßigerweise durch Bildanalyse mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des anorganischen Oxids. Die erhali tenen elektronenmikroskopischen Aufnahmen werden ausgewertet und daraus die mittleren Teilchendurchmesser der Primärpartikel sowie der makroskopische Volumenanteil der Hohlräume und Kanäle bestimmt. Die Bildanalyse erfolgt vorzugsweise durch Überführung des elektronenmikroskopischen Datenmaterials in ein Grauwert-Binärbild und die digitale Auswertung mittels einer geeigneten EDV-Programms.

Das bevorzugt zu verwendende anorganische Oxid kann beispielsweise durch Sprühtrockenen des vermahlenen Hydrogels, welches hierzu mit Wasser oder einem aliphatischen Alkohol vermischt wird, erhalten werden. Solche feinteiligen anorganischen Oxide sind auch im Handel erhältlich.

Das feinteilige anorganische Oxid weist ferner üblicherweise ein Porenvolumen von 0,1 bis 10 cm³/g, bevorzugt von 1,0 bis 4,0 cm³/g und eine spezifische Oberfläche von 10 bis 1000 m²/g, bevorzugt von 100 bis 500 m²/g auf, wobei hier die durch Quecksilber-Porosimetrie nach DIN 66133 und durch Stickstoff-Adsorption nach DIN 66131 bestimmten Werte zu verstehen sind.

Der pH-Wert des anorganischen Oxids, d.h. der negative dekadische Logarithmus der Protonenkonzentration, liegt vorzugsweise im Bereich von 1 bis 6,5, insbesondere im Bereich von 2 bis 6 und besonders bevorzugt im Bereich von 3,5 bis 5,5.

Als anorganische Oxide kommen vor allem die Oxide des Siliciums, des Aluminiums, des Titans oder eines der Metalle der I. bzw. der II. Hauptgruppe des Periodensystems in Betracht. Als ganz bevorzugtes Oxid wird neben Aluminiumoxid oder Magnesiumoxid oder einem Schichtsilikat Siliciumoxid (Kieselgel) verwendet. Es können auch Mischoxide wie Aluminiumsilikate oder Magesiumsilikate eingesetzt werden.

Die als Träger eingesetzten anorganischen Oxide enthalten auf ihrer Oberfläche Hydroxylgruppen. Durch Wasserabspaltung ist es möglich, den Gehalt an OH-Gruppen zu reduzieren oder ganz zu beseitigen. Dies kann durch thermische oder chemische Behandlung erfolgen. Eine thermische Behandlung erfolgt üblicherweise durch Erhitzen des anorganischen Oxids für von 1 bis 24 Stunden, bevorzugt von 2 bis 20 Stunden und insbesondere von 3 bis 12 Stunden, auf Temperaturen von 250 bis 900°C, bevorzugt von 600 bis 800°C. Die Hydroxylgruppen können auch auf chemischem Weg durch Behandeln der anorganischen Oxide mit üblichen Trocknungsmitteln wie SiCl₄, Chlorsilanen oder Aluminiumalkylen entfernt werden. Bevorzugt eingesetzte anorganische Oxide enthalten von 0,5 bis 5 Gew-% Wasser. Der Wassergehalt wird üblicherweise dadurch bestimmt, daß man das anorganische Oxid bei 160 °C unter Normaldruck bis zur Gewichtskonstanz trocknet. Die Gewichtsabnahme entspricht dem ursprünglichen Wassergehalt.

Vorzugsweise werden bei der Herstellung der titanhaltigen Feststoffkomponente a) pro Mol des anorganischen Oxids von 0,1 bis 1,0 mol, insbesondere von 0,2 bis 0,5 mol der chlorfreien Verbindung des Magnesiums verwendet.

Bei der Herstellung der titanhaltigen Feststoffkomponente a) kommen ferner C₁- bis C₈-Alkanole wie Methanol, Ethanol, n-Propanol, Isopropanol, n-Butanol, sek.-Butanol, tert.-Butanol, Isobutanol, n-Hexanol, n-Heptanol, n-Oktanol oder 2-Ethylhexanol oder deren Mischungen zum Einsatz. Bevorzugt wird Ethanol verwendet.

Die titanhaltige Feststoffkomponente a) enthält des weiteren noch Elektronendonorverbindungen, beispielsweise mono- oder polyfunktionelle Carbonsäuren, Carbonsäureanhydride oder Carbonsäureester, ferner Ketone, Ether, Alkohole, Lactone oder phosphor- oder siliciumorganische Verbindungen.

Bevorzugt werden als Elektronendonorverbindungen innerhalb der titanhaltigen Feststoffkomponente Carbonsäurederivate und insbesondere Phthalsäurederivate der allgemeinen Formel (II) 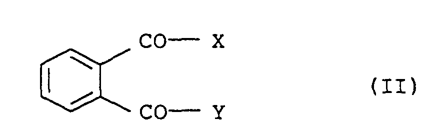 verwendet, wobei X und Y jeweils für ein Chlor- oder Bromatom oder einen C₁-C₁₀-Alkoxyrest oder gemeinsam für Sauerstoff in Anhydridfunktion stehen. Besonders bevorzugte Elektronendonorverbindungen sind Phthalsäureester, wobei X und Y einen C₁-C₈-Alkoxyrest, beispielsweise einen Methoxy-, Ethoxy-, n-Propyloxy-, iso-Propyloxy- n-Butyloxy-, sek.-Butyloxy-, iso-Butyloxy- oder einen tert.-Butyloxyrest, bedeuten. Beispiele für vorzugsweise eingesetzte Phthalsäureester sind Diethylphthalat, Di-n-butylphthalat, Di-iso-butylphthalat, Dipentylphthalat, Dihexylphthalat, Di-nheptylphthalat, Di-n-octylphthalat oder Di-2-ethylhexylphthalat.

Weiter bevorzugte Elektronendonorverbindungen innerhalb der titanhaltigen Feststoffkomponente sind Diester von 3- oder 4-gliedrigen, gegebenenfalls substituierten Cycloalkyl-1,2-dicarbonsäuren, sowie Monoester von substituierten Benzophenon-2-carbonsäuren oder substituierten Benzophenon-2-carbonsäuren. Als Hydroxyverbindungen werden bei diesen Estern die bei Veresterungsreaktionen üblichen Alkanole verwendet, beispielsweise C₁-C₁₅-Alkanole oder C₅-C₇-Cycloalkanole, die ihrerseits eine oder mehrere C₁-C₁₀-Alkylgruppen tragen können, ferner C₆-C₁₀-Phenole.

Es können auch Mischungen verschiedener Elektronendonorverbindungen eingesetzt werden.

Die titanhaltige Feststoffkomponente a) kann nach an sich bekannten Methoden hergestellt werden, die beispielsweise in der EP-A 171 200, der GB-A 2 111 066, der US-A 48 57 613 und der US-A 52 88 824 beschrieben sind. Sie ist jedoch dadurch charakterisiert, daß man in der ersten Stufe ihrer Herstellung die chlorfreie Verbindung des Magnesiums in einem inerten Lösungsmittel verwendet und diese mit dem Träger und dem C₁- bis C₈-Alkanol zu einem chlorfreien Zwischenprodukt umsetzt, welches vorteilhaft ohne Reinigung oder Extraktion weiterverarbeitet wird.

Bei der Herstellung der titanhaltigen Feststoffkomponente a) wird bevorzugt folgendes zweistufige Verfahren angewandt:

In der ersten Stufe versetzt man zunächst in einem inerten Lösungsmittel, bevorzugt einem flüssigen Alkan oder einem aromatischen Kohlenwasserstoff, z.B. Toluol oder Ethylbenzol, das anorganische Oxid mit einer Lösung der chlorfreien Verbindung des Magnesiums, wonach man dieses Gemisch 0,5 bis 5 Stunden lang bei einer Temperatur von 10 bis 120°C in der Regel unter Rühren reagieren läßt. Anschließend fügt man üblicherweise unter ständigem Rühren bei Temperaturen von -20 bis 80°C, vorzugsweise von 0 bis 40°C den C₁-C₈-Alkanol im wenigstens 1,3-fachen, bevorzugt im 1,6-fachen bis 3-fachen und insbesondere im 1,8-fachen bis 2,0-fachen molaren Überschuß, bezogen auf die magnesiumhaltige Verbindung, hinzu. Dabei entsteht ein chlorfreies Zwischenprodukt, welches vorzugsweise ohne Reinigung oder Extraktion weiterverarbeitet wird. Nach etwa 10 bis 120 Minuten, vorzugsweise nach etwa 20 bis 60 Minuten, fügt man diesem Zwischenprodukt bei einer Temperatur von 10 bis 50°C das Titanhalogenid sowie die Elektronendonorverbindung hinzu. Dabei setzt man pro Mol Magnesium des aus der ersten Stufe erhaltenen Feststoffs von 1 bis 15 mol, bevorzugt von 2 bis 5 mol des Titanhalogenids und von 0,01 bis 1 mol, insbesondere von 0,3 bis 0,7 mol, der Elektronendonorverbindung ein. Dieses Gemisch läßt man wenigstens 10 Minuten, bevorzugt 30 Minuten und insbesondere von 45 bis 90 Minuten bei einer Temperatur im Bereich von 10 bis 150°C, insbesondere von 60 bis 130°C, im allgemeinen unter Rühren reagieren, der so erhaltene feste Stoff wird anschließend abfiltriert und mit einem C₇-C₁₀-Alkylbenzol, bevorzugt mit Ethylbenzol, gewaschen.

In der zweiten Stufe extrahiert man den aus der ersten Stufe erhaltenen Feststoff bei Temperaturen im Bereich von 100 bis 150°C mit überschüssigem Titantetrachlorid oder einer im Überschuß vorliegenden Lösung von Titantetrachlorid in einem inerten Lösungsmittel, vorzugsweise einem C₇-C₁₀-Alkylbenzol, wobei das Lösungsmittel wenigstens 5 Gew.-% Titantetrachlorid enthält. Die Extraktion wird in der Regel wenigstens 30 Minuten lang durchgeführt. Danach wäscht man das Produkt solange mit einem flüssigen Alkan, bis der Gehalt der Waschflüssigkeit an Titantetrachlorid weniger als 2 Gew.-% beträgt.

Die auf diese Weise erhältliche titanhaltige Feststoffkomponente a) wird mit Cokatalysatoren als Ziegler-Natta-Katalysatorsystem verwendet. Als Cokatalysatoren kommen dabei Aluminiumverbindungen b) und weitere Elektronendonorverbindungen c) in Betracht.

Geeignete Aluminiumverbindungen b) sind außer Trialkylaluminium auch solche Verbindungen, bei denen eine Alkylgruppe durch eine Alkoxygruppe oder durch ein Halogenatom, beispielsweise durch Chlor oder Brom, ersetzt ist. Die Alkylgruppen können gleich oder voneinander verschieden sein. Es kommen lineare oder verzweigte Alkylgruppen in Betracht. Bevorzugt werden Trialkylaluminiumverbindungen verwendet, deren Alkylgruppen jeweils 1 bis 8 C-Atome aufweisen, beispielsweise Trimethylaluminium, Triethylaluminium, Tri-iso-butylaluminium, Trioctylaluminium oder Methyldiethylaluminium oder Mischungen daraus.

Neben der Aluminiumverbindung b) verwendet man als weiteren Cokatalysator Elektronendonorverbindungen c) wie beispielsweise mono- oder polyfunktionelle Carbonsäuren, Carbonsäureanhydride und Carbonsäureester, ferner Ketone, Ether, Alkohole, Lactone, sowie phosphor- und siliciumorganische Verbindungen, wobei die Elektronendonorverbindungen c) gleich oder verschieden von den zur Herstellung der titanhaltige Feststoffkomponente a) eingesetzten Elektronendonorverbindungen sein können. Bevorzugte Elektronendonorverbindungen sind dabei siliciumorganische Verbindungen der allgemeinen Formel (I)

R¹ ₙSi(OR²)₄₋ₙ (I)

wobei R¹ gleich oder verschieden ist und eine C₁-C₂₀-Alkylgruppe, eine 5- bis 7-gliedrige Cycloalkylgruppe, die ihrerseits durch C₁-C₁₀-Alkyl substituiert sein kann, eine C₆-C₁₈-Arylgruppe oder eine C₆-C₁₈-Aryl-C₁-C₁₀-alkylgruppe bedeutet, R² gleich oder verschieden ist und eine C₁-C₂₀-Alkylgruppe bezeichnet und n für die ganzen Zahlen 1, 2 oder 3 steht. Besonders bevorzugt werden solche Verbindungen, in denen R¹ eine C₁-C₈-Alkylgruppe oder eine 5- bis 7-gliedrige Cycloalkylgruppe sowie R² eine C₁-C₄-Alkylgruppe bedeutet und n für die Zahlen 1 oder 2 steht.

Unter diesen Verbindungen sind insbesondere Dimethoxydiisopropylsilan, Dimethoxyisobutylisopropylsilan, Dimethoxydiisobutylsilan, Dimethoxydicyclopentylsilan, Dimethoxydicyclohexylsilan, Dimethoxycyclohexylmethylsilan, Dimethoxyisopropyl-tert.-butylsilan, Dimethoxyisobutyl-sek.-butylsilan und Dimethoxyisopropyl-sek.-butylsilan hervorzuheben.

Die als Cokatalysatoren wirkenden Verbindungen b) sowie c) können in beliebiger Reihenfolge einzeln oder als Gemisch verwendet werden. Man kann sie sowohl nacheinander als auch zusammen auf die titanhaltige Feststoffkomponente a) einwirken lassen. Üblicherweise geschieht dies bei Temperaturen von 0 bis 150°C, insbesondere von 20 bis 90°C und Drücken von 1 bis 100 bar, insbesondere von 1 bis 40 bar.

Bevorzugt werden die Cokatalysatoren b) in einer solchen Menge eingesetzt, daß das Atomverhältnis zwischen Aluminium aus der Aluminiumverbindung b) und Titan aus der titanhaltigen Feststoffkomponente a) 10:1 bis 800:1, insbesondere 20:1 bis 200:1 beträgt.

Das erfindungsgemäße Verfahren ist u.a. dadurch charakterisiert, daß man das Molverhältnis zwischen der Aluminiumverbindung b) und der weiteren Elektronendonorverbindung c) auf 1,5 : 1 bis 9 : 1, insbesondere 2 : 1 bis 8 : 1, eingestellt. Wird ein Molverhältnis größer 9 : 1 eingesetzt, ist die Stereospezifität der gebildeten Propylenhomopolymerisate nicht ausreichend. Liegt das Verhältnis unter 1,5 : 1, ist das Verfahren aus wirtschaftlichen Gründen, insbesondere wegen der großen Mengen der dann eingesetzten weiteren Elektronendonorverbindung c), wenig vorteilhaft.

Das erfindungsgemäße Verfahren kann in den üblichen, für die Polymerisation von Propylen verwendeten Reaktoren entweder absatzweise oder bevorzugt kontinuierlich u.a. als Suspensionspolymerisation oder bevorzugt als Gasphasenpolymerisation durchgeführt werden. Geeignete Reaktoren sind u.a. kontinuierlich betriebene Rührreaktoren, Schleifenreaktoren oder Wirbelbettreaktoren, wobei kontinuierlich betriebene Rührreaktoren, die ein Festbett aus feinteiligem Polymerisat enthalten, welches üblicherweise durch geeignete Rührvorrichtungen in Bewegung gehalten wird, bevorzugt sind. Selbstverständlich kann die Reaktion auch in einer Reihe von mehreren, hintereinander geschalteten Reaktoren durchgeführt werden (Reaktorkaskade).

Das erfindungsgemäße Verfahren wird in der Weise durchgeführt, daß man Propylen bei Temperaturen im Bereich von 20 bis 150°C und Drücken im Bereich von 1 bis 100 bar und mittleren Verweilzeiten von 0,5 bis 5 Stunden polymerisiert. Bevorzugt sind dabei Temperaturen von 60 bis 90°C, Drücke von 20 bis 35 bar und mittlere Verweilzeiten von 0,5 bis 3 Stunden.

Die Molmasse der erhaltenen Propylenhomopolymerisate kann durch Zugabe von in der Polymerisationstechnik gebräuchlichen Reglern, beispielsweise von Wasserstoff, kontrolliert und über einen weiten Bereich eingestellt werden. Weiterhin ist es möglich, inerte Lösungsmittel wie beispielsweise Toluol oder Hexan, Inertgase wie Stickstoff oder Argon und kleinere Mengen Polypropylenpulver mitzuverwenden. Die erfindungsgemäßen Propylenhomopolymerisate weisen vorzugsweise Molmassen (Gewichtsmittel) zwischen 20 000 und 500 000 g/mol auf. Ihre Schmelze-Fließraten, bei 230°C und unter einem Gewicht von 2,16 kg nach ISO 1133, liegen im Bereich von 0,1 bis 100 g/10 min, insbesondere im Bereich von 0,5 bis 50 g/10 min.

Den mit Hilfe des erfindungsgemäßen Verfahrens erhaltenen Propylenhomopolymerisaten können vor der Anwendung Additive wie Stabilisatoren, Gleit- und Entformungsmittel, Füllstoffe, Nukleierungsmittel, Antistatika, Farbstoffe, Pigmente oder Flammschutzmittel in üblichen Mengen zugesetzt werden. In der Regel werden diese bei der Granulierung des pulverförmig anfallenden Polymerisationsprodukte in das Polymerisat eingearbeitet.

Übliche Stabilisatoren sind Antioxidantien wie sterisch gehinderte Phenole, Verarbeitungsstabilisatoren wie Phosphite oder Phosphonite, Säurefänger wie Calcium- oder Zinkstearat oder Dihydrotalcit, sterisch gehinderte Amine oder auch UV-Stabilisatoren. Im allgemeinen enthalten die erfindungsgemäßen Propylenhomopolymerisate einen oder mehrere der Stabilisatoren in Mengen bis 2 Gew.-%.

Geeignete Gleit- und Entformungsmittel sind beispielsweise Fettsäuren, Calcium- oder Zinksalze der Fettsäuren, Fettsäureamide oder niedermolekulare Polyolefinwachse, die üblicherweise in Konzentrationen bis 2 Gew.-% eingesetzt werden.

Als Füllstoffe für die statistischen Propylencopolymerisate kommen z.B. Talkum, Kreide oder Glasfasern in Betracht, wobei hier Mengen bis 50 Gew.-% verwendet werden.

Geeignete Nukleierungsmittel sind beispielsweise anorganische Zusatzstoffe wie Talkum, Kieselsäure oder Kaolin, Salze von Monooder Polycarbonsäuren wie Natriumbenzoat oder Aluminium-tert.-butylbenzoat, Dibenzylidensorbitol oder dessen C₁-C₈-alkylsubstituierte Derivate wie Methyl- oder Dimethyldibenzylidensorbitol oder Salze von Diestern der Phosphorsäure wie Natrium-2,2'-methylenbis(4,6-di-tert.-butylphenyl)phosphat. Ihr Gehalt beträgt in der Regel bis 2 Gew.-%.

Solche Additive sind in der Regel handelsüblich und werden beispielsweise in Gächter/Müller, Plastics Additives Handbook, 4th Edition, Hansa Publishers, Munich, 1993 beschrieben.

Die mit Hilfe des erfindungsgemäßen Verfahrens erhaltenen Propylenhomopolymerisate zeichnen sich gegenüber den bisher bekannten Propylenhomopolymerisaten insbesondere durch einen höheren Anteil an Polymerketten mit langen, fehlerfrei isotaktischen Polymersequenzen und weiter verringerte xylollösliche Anteile aus. Dies äußert sich u.a. in einem erhöhten Schmelzpunkt, einer gesteigerten Kristallisationsgeschwindigkeit und einer erhöhten Materialsteifigkeit sowie einem Anwachsen der höchstisotaktischen TREF-Fraktionen. Darüber hinaus weisen die erfindungsgemäßen Propylenhomopolymerisate auch reduzierte Gehalte an Chlor auf. Die Produktivität des zur Herstellung dieser Propylenhomopolymerisate verwendeten Verfahrens ist gegenüber den bekannten Verfahren deutlich erhöht.

Aufgrund ihrer guten mechanischen Eigenschaften eignen sich die erhaltenen Propylenhomopolymerisate vor allem für die Herstellung von Folien, Fasern und Formkörpern.

### Beispiele

Zur Charakterisierung der Polymerisate wurden folgende Prüfungen durchgeführt:
Bestimmung des Schmelz-Fließrate (MFR) :
   nach ISO-Norm 1133, bei 230°C und unter einem Gewicht von 2,16 kg.
Bestimmung des xylollöslichen Anteils:
   nach ISO-Norm 1873-1:1991.
Fraktionierung nach Taktizität:
   Die Auftrennung des Propylenhomopolymerisats bezüglich der Taktizität erfolgte durch eine präparative Fraktionierung durch Temperature Rising Elution Fractionation (TREF). Hierzu wurden jeweils 5 g des Propylenhomopolymerisats in 400 ml siedendem Xylol gelöst und die Lösung dann linear mit einer Kühlrate von 10°C/h auf 25°C abgekühlt, wobei der Großteil des Polymerisats ausfällt.
   Die Kristallsuspension wurde in die 500 ml fassende, temperierbare Extraktionsapparatur überführt, die der von W. Holtup in Makromol. Chem. **178**, 2335 (1977) beschriebenen entspricht, und auf die erste Elutionstemperatur erwärmt. Die Polypropylenkristalle wurden bei dieser Temperatur unter heftiger Durchmischung 15 Minuten extrahiert. Anschließend wurde die Polymerlösung abgelassen, während die Polypropylenkristalle im Extraktor zurückblieben. Das gelöste Polymer wurde in kaltem Aceton (Temperatur < 0°C) ausgefällt, abfiltriert und 4 bis 5 Stunden bei 100°C im Vakuum getrocknet.
   Der Extraktor wurde nun auf die nächste Elutionstemperatur erwärmt und es wurden 400 ml Xylol der selben Temperatur hinzugegeben. Es wurde wiederum 15 Minuten unter heftiger Durchmischung extrahiert, die Polymerlösung abgelassen, das gelöste Polymer in kaltem Aceton ausgefällt, abfiltriert und getrocknet. Diese Schritte wurden so lange wiederholt, bis sich das gesamte Propylenhomopolymerisat gelöst hatte.
   Die in der Tabelle angegebenen TREF-Fraktionen beschreiben den Anteil, der sich bei der Extraktion bei der angegebenen Temperatur gelöst hat. Die Gew.-%-Angaben beziehen sich hierbei auf die Einwaage von 5 g, d.h. bedingt durch Wäge- und Filtrationsverluste ergibt die Summe der Fraktionen jeweils nicht ganz 100 Gew-%.
   Die Anteil der Propylenhomopolymerisate, der bei gegebener Temperatur in Xylol ungelöst bleibt, läßt sich als Summe der Fraktionen berechnen, die bei höheren Elutionstemperaturen in Lösung gegangen sind.
Bestimmung des Q-Wertes:
   Der Q-Wert ist das Verhältnis von Massenmittel (M_{w}) zu Zahlenmittel (Mₙ) der Molmassen der Polymerisate. Massenmittel (M_{w}) und Zahlenmittel (Mₙ) wurden durch Gelpermationschromatographie (GPC) bei 135°C in Trichlorbenzol bestimmt.
Bestimmung des DSC-Schmelzpunkts:
   Nach ISO-Norm 3146 mit einer Aufheizrate von 10°C.
Bestimmung des Elastizitätsmoduls (Zug-E-Modul):
   Nach ISO-Norm 527-2, bei 23°C Meßtemperatur
Bestimmung des Chlorgehalts:
   Der Chlorgehalt der Polymerisate wurde durch mikrocoulometrische Bestimmung nach DIN 51408 Teil 2 ermittelt.
Bestimmung des Produktivität:
   Die Produktivität ist die Menge an Polymerisat in Gramm, die pro Gramm eingesetzter titanhaltiger Feststoffkomponente erhalten wurde.
Bestimmung des mittleren Teilchendurchmessers :
   Zur Bestimmung des mittleren Teilchendurchmessers des Kieselgels wurde durch Coulter-Counter-Analyse nach ASTM Standard D 4438 die Korngrößenverteilung der Kieselgelpartikel ermittelt und daraus der volumenbezogene Mittelwert (Medianwert) berechnet.
Bestimmung des Porenvolumens:
   Durch Quecksilber-Porosimetrie nach DIN 66133
Bestimmung der spezifischen Oberfläche:
   Durch Stickstoff-Adsorption nach DIN 66131
Bestimmung des Wassergehalts:
   Zur Bestimmung des Wassergehalts wurden 5 g Kieselgel bei 160°C unter Normaldruck 15 min getrocknet (Gewichtskonstanz). Die Gewichtsabnahme entspricht dem ursprünglichen Wassergehalt.
Bestimmung des makroskopischen Volumenanteils der Hohlräume und Kanäle:
   Die Bestimmung der mittleren Teilchengröße der Primärpartikel sowie des makroskopischen Volumenanteils der Hohlräume und Kanäle des verwendeten Kieselgels geschah mit Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des Kieselgels. Die erhaltenen elektronenmikroskopischen Aufnahmen wurden in ein Grauwert-Binärbild überführt und mittels des Software-Pakets Analysis der Fa. SIS digital ausgewertet.

### Beispiel 1

a) Herstellung der titanhaltigen Feststoffkomponente
   In einer ersten Stufe wurde feinteiliges, sphärisches Kieselgel (SiO₂), das einen mittleren Teilchendurchmesser von 45 µm, ein Porenvolumen von 1,5 cm³/g, eine spezifische Oberfläche von 260 m²/g und einen Wassergehalt von 2,7 Gew.-% aufwies, mit einer Lösung von n-Butyloctylmagnesium in n-Heptan versetzt, wobei pro Mol SiO₂ 0,3 mol der Magnesiumverbindung eingesetzt wurden. Das feinteilige Kieselgel wies einen pH-Wert von 5,5 auf und war zusätzlich durch eine mittlere Teilchengröße der Primärpartikel von 3-5 µm und durch Hohlräume und Kanäle mit einem Durchmesser von 3-5 µm charakterisiert, wobei der makroskopische Volumenanteil der Hohlräume und Kanäle am Gesamtpartikel bei etwa 25 % lag. Die Lösung wurde 30 Minuten bei 95°C gerührt, danach auf 20°C abgekühlt, wonach die 1,8-fache molare Menge, bezogen auf die magnesiumorganische Verbindung, an Ethanol in 20 ml Heptan unter Kühlung zugesetzt wurde, wobei die Reaktionstemperatur auf unter 45°C gehalten wurde. Nach 45 Minuten wurde das chlorfreie Zwischenprodukt ohne Reinigung bzw. Extraktionsschritt unter ständigem Rühren mit 4,2 mol Titantetrachlorid und 0,6 mol Di-n-butylphthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.
   Das daraus erhaltene Festprodukt extrahierte man 90 Minuten lang in einer zweiten Stufe bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.
   Die titanhaltige Feststoffkomponente enthielt
   3,8 Gew.-% Ti
   7,2 Gew.-% Mg
   28,1 Gew.-% Cl.
b) Polymerisation von Propylen

Die Polymerisation wurde in einem vertikal gerührten Gasphasenreaktor mit einem Nutzvolumen von 800 l in Anwesenheit von Wasserstoff als Molmassenregler durchgeführt. Der Reaktor enthielt ein bewegtes Festbett aus feinteiligem Polymerisat.

In den Gasphasenreaktor wurde bei einem Druck von 32 bar und bei einer Temperatur von 80°C gasförmiges Propylen eingeleitet. Bei einer mittleren Verweilzeit von 1,5 Stunden wurde mit Hilfe der in Beispiel 1a) beschriebenen titanhaltigen Feststoffkomponente kontinuierlich polymerisiert, wobei pro Stunde 6,6 g der titanhaltigen Feststoffkomponente 1a), 360 mmol Triethylaluminium und 45 mmol Dimethoxydicyclopentylsilan als Cokatalysator verwendet wurden.

Nach Beendigung der Gasphasenpolymerisation erhielt man ein Propylenhomopolymerisat mit einer Schmelze-Fließrate von 11,2 g/10 min, bei 230°C und 2,16 kg (nach ISO 1133).

### Vergleichsbeispiel A

a) Herstellung der titanhaltigen Feststoffkomponente
   In einer ersten Stufe wurde das auch in Beispiel 1 eingesetzte feinteilige sphärische Kieselgel mit einer Lösung von n-Butyloctylmagnesium in n-Heptan versetzt, wobei pro Mol SiO₂ 0,3 mol der Magnesiumverbindung eingesetzt wurden. Die Lösung wurde 45 Minuten bei 95°C gerührt, danach auf 20°C abgekühlt, wonach die 10-fache molare Menge, bezogen auf die magnesiumorganische Verbindung, an Chlorwasserstoff eingeleitet wurde. Nach 60 Minuten wurde das Reaktionsprodukt unter ständigem Rühren mit 3 mol Ethanol pro Mol Magnesium versetzt. Dieses Gemisch wurde 0,5 Stunden bei 80°C gerührt und anschließend mit 7,2 mol Titantetrachlorid und 0,5 mol Di-n-butylphthalat, jeweils bezogen auf 1 mol Magnesium, versetzt. Anschließend wurde 1 Stunde bei 100°C gerührt, der so erhaltene feste Stoff abfiltriert und mehrmals mit Ethylbenzol gewaschen.
   Das daraus erhaltene Festprodukt extrahierte man 3 Stunden lang bei 125°C mit einer 10 vol.-%igen Lösung von Titantetrachlorid in Ethylbenzol. Danach wurde das Festprodukt durch Filtration vom Extraktionsmittel getrennt und solange mit n-Heptan gewaschen, bis das Extraktionsmittel nur noch 0,3 Gew.-% Titantetrachlorid aufwies.
   Die titanhaltige Feststoffkomponente enthielt
   3,5 Gew.-% Ti
   7,4 Gew.-% Mg
   28,2 Gew.-% Cl.

Es wurde analog zum erfindungsgemäßen Beispiel 1 Propylen unter den gleichen Bedingungen polymerisiert, wobei aber die in Beispiel Aa) beschriebene titanhaltigen Feststoffkomponente eingesetzt wurde. Es wurden pro Stunde 8,4 g der titanhaltigen Feststoffkomponente Aa), 360 mmol Triethylaluminium und 45 mmol Dimethoxydicyclopentylsilan als Cokatalysator verwendet:

Nach Beendigung der Gasphasenpolymerisation erhielt man ein Propylenhomopolymerisat mit einer Schmelze-Fließrate von 12,1 g/10 min, bei 230°C und 2,16 kg (nach ISO 1133).

### Beispiel 2

Das erfindungsgemäße Beispiel 1 wurde im vertikal gerührten 800 1-Gasphasenreaktor analog wiederholt. Propylen wurde bei einer mittleren Verweilzeit von 1,5 Stunden kontinuierlich polymerisiert, wobei pro Stunde 5,7 g der in Beispiel 1a) beschriebenen titanhaltigen Feststoffkomponente 1a), 360 mmol der Aluminiumkomponente und 120 mmol Dimethoxydicyclopentylsilan als Katalysatorbestandteile verwendet wurden.

Nach Beendigung der Gasphasenpolymerisation erhielt man ein Propylenhomopolymerisat mit einer Schmelze-Fließrate von 12,3 g/10 min, bei 230°C und 2,16 kg (nach ISO 1133).

### Vergleichsbeispiel B

Es wurde analog zum erfindungsgemäßen Beispiel 2 Propylen unter den gleichen Bedingungen polymerisiert, wobei aber die im Vergleichsbeispiel Aa) hergestellte titanhaltige Feststoffkomponente Aa) verwendet wurde.

Nach Beendigung der Gasphasenpolymerisation erhielt man ein Propylenhomopolymerisat mit einer Schmelze-Fließrate von 13,0 g/10 min, bei 230°C und 2,16 kg (nach ISO 1133).

### Beispiel 3

Das erfindungsgemäße Beispiel 1 wurde im vertikal gerührten 800 1-Gasphasenreaktor analog wiederholt. Propylen wurde bei einer mittleren Verweilzeit von 1,5 Stunden kontinuierlich polymerisiert, wobei pro Stunde 7,3 g der in Beispiel 1a) beschriebenen titanhaltigen Feststoffkomponente 1a), 360 mmol der Aluminiumkomponente und 45 mmol Dimethoxyisobutylisopropylsilan als Katalysatorbestandteile verwendet wurden.

Nach Beendigung der Gasphasenpolymerisation erhielt man ein Propylenhomopolymerisat mit einer Schmelze-Fließrate von 12,4 g/10 min, bei 230°C und 2,16 kg (nach ISO 1133).

### Vergleichsbeispiel C

Es wurde analog zum erfindungsgemäßen Beispiel 3 Propylen unter den gleichen Bedingungen polymerisiert, wobei aber die im Vergleichsbeispiel Aa) hergestellte titanhaltige Feststoffkomponente Aa) verwendet wurde.

Nach Beendigung der Gasphasenpolymerisation erhielt man ein Propylenhomopolymerisat mit einer Schmelze-Fließrate von 12,8 g/10 min, bei 230°C und 2,16 kg (nach ISO 1133).

In der nachfolgenden Tabelle sind sowohl für die erfindungsgemäßen Beispiele 1 bis 3 als auch für die Vergleichsbeispiele A bis C die folgenden Eigenschaften der jeweils erhaltenen Propylenhomopolymerisate aufgeführt: xylollöslicher Anteil, Anteil der TREF-Fraktionen (Maß für die Stereospezifität des Polymerisats) sowie der daraus berechnete, in Xylol unlösliche Anteil, Q-Wert, Schmelzpunkt, Steifigkeit (Zug-E-Modul) und Chlorgehalt. Darüber hinaus sind auch die Molverhältnisse der bei der Polymerisation eingesetzten Aluminiumverbindungen b) und weiteren Elektronendonorverbindingen c) sowie die Produktivitäten der eingesetzten Katalysatorsysteme enthalten.

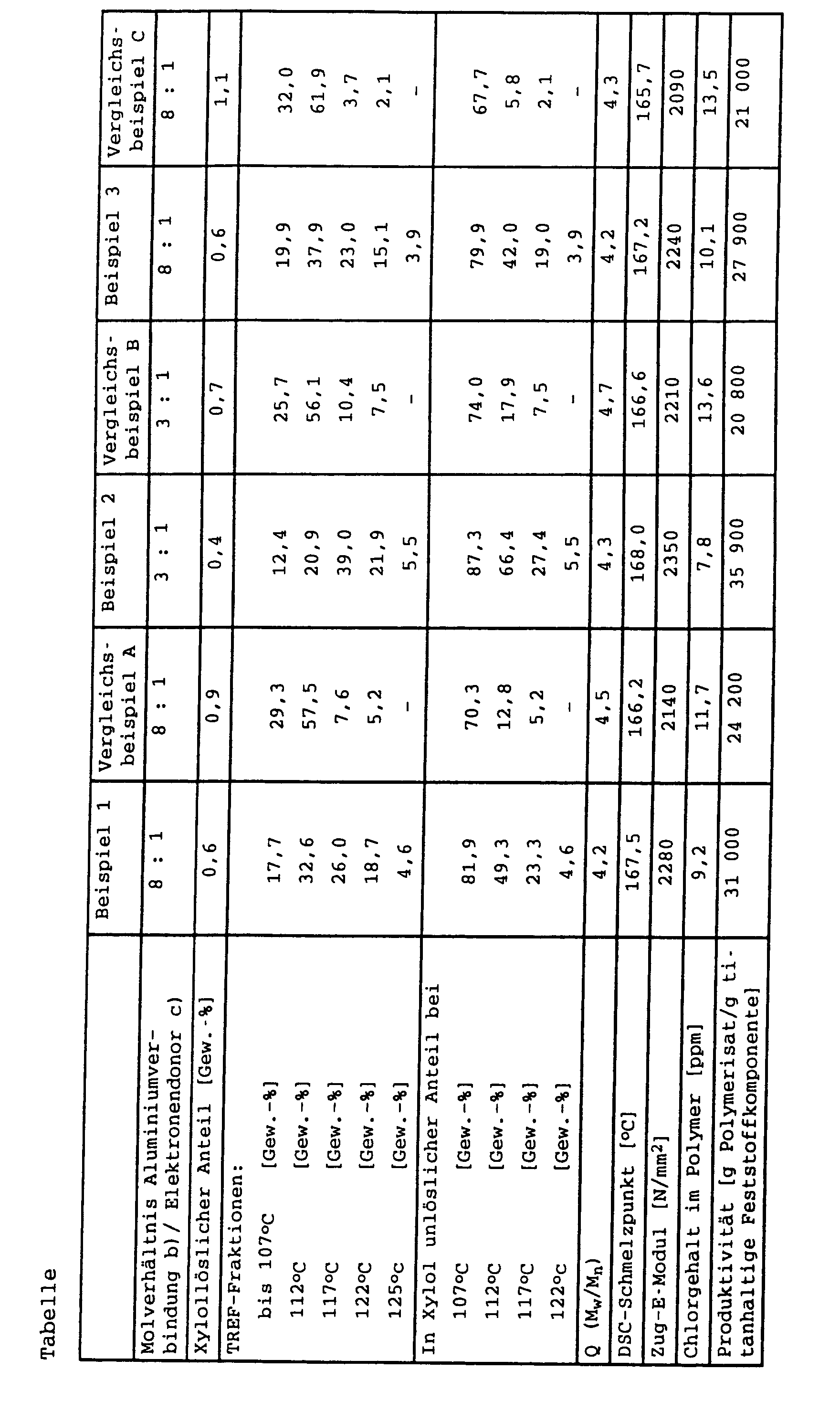

Ein Vergleich zwischen den erfindungsgemäßen Beispielen 1 bis 3 und den Vergleichsbeispielen A bis C macht deutlich, daß die mit Hilfe des erfindungsgemäßen Verfahrens erhaltenen Propylenhomopolymerisate einen signifikant höheren Gehalt an höchstisotaktischen Polymerfraktionen und geringere xylollösliche Anteile aufweisen. Dementsprechend sind sie hochkristallin, besitzen einen höheren DSC-Schmelzpunkt und eine erhöhte Steifigkeit (Zug-E-Modul). Außerdem weisen sie einen verringerten Chlorgehalt auf. Des weiteren erhält man bei dem erfindungsgemäßen Verfahren - im Gegensatz zu herkömmlichen Verfahren - mit einer steigenden Menge an weiterem (externem) Elektronendonor c) eine höhere Produktivität.

## Patentansprüche

1. Verfahren zur Herstellung von Propylenhomopolymerisaten durch Polymerisation von Propylen bei Temperaturen von 20 bis 150°C und Drücken von 1 bis 100 bar in Gegenwart eines Ziegler-Natta-Katalysatorsystems, enthaltend als aktive Bestandteile
a) eine titanhaltige Feststoffkomponente, die durch Umsetzung eines Titanhalogenids mit einer chlorfreien Verbindung des Magnesiums, einem anorganischen Oxid als Träger, einem C₁- bis C₈-Alkanol und einer Elektronendonorverbindung in der Weise erhalten wird, daß man
in einer ersten Stufe das anorganische Oxid als Träger mit einer Lösung der chlorfreien Verbindung des Magnesiums in einem inerten Lösungsmittel versetzt, dabei dieses Gemisch von 0,5 bis 5 Stunden bei einer Temperatur von 10 bis 120°C reagieren läßt und anschließend bei einer Temperatur von -20 bis 80°C unter ständigem Durchmischen mit einem C₁- bis C₈-Alkanol im wenigstens 1,3-fachen molaren Überschuß, bezogen auf die Verbindung des Magnesiums, zu einem chlorfreien Zwischenprodukt umsetzt, danach diesem das Titanhalogenid und die Elektronendonorverbindung hinzufügt, das daraus resultierende Gemisch wenigstens 10 Minuten bei einer Temperatur von 10 bis 150°C reagieren läßt, den so erhaltenen festen Stoff anschließend abfiltriert, wäscht und
in einer zweiten Stufe den aus der ersten Stufe erhaltenen Feststoff in einem inerten Lösungsmittel, welches wenigstens 5 Gew.-% Titantetrachlorid enthält, extrahiert und mit einem flüssigen Alkan wäscht,
sowie als Cokatalysatoren
b) eine Aluminiumverbindung und
c) eine weitere Elektronendonorverbindung,
wobei man bei der Polymerisation das Molverhältnis zwischen der Aluminiumverbindung b) und der weiteren Elektronendonorverbindung c) auf ein Verhältnis von 1,5 : 1 bis 9 : 1 einstellt.

2. Verfahren zur Herstellung von Propylenhomopolymerisaten nach Anspruch 1, **dadurch gekennzeichnet, daß** man das Molverhältnis zwischen der Aluminiumverbindung b) und der weiteren Elektronendonorverbindung c) auf ein Verhältnis von 2 : 1 bis 8 : 1 einstellt.

3. Verfahren zur Herstellung von Propylenhomopolymerisaten nach Anspruch 1 oder 2, **dadurch gekennzeichnet, daß** man bei der Herstellung der titanhaltigen Feststoffkomponente a) in der ersten Stufe Ethanol als C₁- bis C₈-Alkanol verwendet.

4. Verfahren zur Herstellung von Propylenhomopolymerisaten nach den Ansprüchen 1 bis 3, **dadurch gekennzeichnet, daß** man bei der Herstellung der titanhaltigen Feststoffkomponente a) ein Magnesiumdi-(C₁-C₁₀-alkyl) als chlorfreie Verbindung des Magnesiums einsetzt.

5. Verfahren zur Herstellung von Propylenhomopolymerisaten nach den Ansprüchen 1 bis 4, **dadurch gekennzeichnet, daß** man bei der Herstellung der titanhaltigen Feststoffkomponente a) ein anorganisches Oxid als Träger verwendet, das einen pH-Wert von 1 bis 6,5, einen mittleren Teilchendurchmesser von 5 bis 200 µm und Hohlräume bzw. Kanäle mit einem mittleren Durchmesser von 1 bis 20 µm aufweist, deren makroskopischer Volumenanteil am Gesamtpartikel im Bereich von 5 bis 30 % liegt.

6. Verfahren zur Herstellung von Propylenhomopolymerisaten nach den Ansprüchen 1 bis 5, **dadurch gekennzeichnet, daß** man bei der Herstellung der titanhaltigen Feststoffkomponente a) ein sprühgetrocknetes anorganisches Oxid verwendet.

7. Verfahren zur Herstellung von Propylenhomopolymerisaten nach den Ansprüchen 1 bis 6, **dadurch gekennzeichnet, daß** man bei der Herstellung der titanhaltigen Feststoffkomponente a) ein Kieselgel als anorganisches Oxid verwendet.

8. Verfahren zur Herstellung von Propylenhomopolymerisaten nach den Ansprüchen 1 bis 7, **dadurch gekennzeichnet, daß** man als Aluminiumverbindung b) eine Trialkylaluminiumverbindung einsetzt, deren Alkylgruppen jeweils 1 bis 8 C-Atome aufweisen.

9. Verfahren zur Herstellung von Propylenhomopolymerisaten nach den Ansprüchen 1 bis 8, **dadurch gekennzeichnet, daß** man als weitere Elektronendonorverbindung c) mindestens eine siliciumorganische Verbindung der allgemeinen Formel (I)
R¹ ₙSi(OR²)₄₋ₙ (I)
verwendet, in der R¹ gleich oder verschieden ist und eine C₁- bis C₂₀-Alkylgruppe, eine 5- bis 7-gliedrige Cycloalkylgruppe, die ihrerseits durch C₁- bis C₁₀-Alkyl substituiert sein kann, eine C₆- bis C₂₈-Arylgruppe oder eine C₆- C₁₈-Aryl-C₁-C₁₀-alkylgruppe, R² gleich oder verschieden ist und eine C₁- bis C₂₀-Alkylgruppe bedeutet und n für die Zahlen 1, 2 oder 3 steht.

## Claims

1. A process for the preparation of propylene homopolymers by polymerizing propylene at from 20 to 150°C and from 1 to 100 bar in the presence of a Ziegler-Natta catalyst system containing, as active components,
a) a titanium-containing solid component which is obtained by reacting a titanium halide with a chlorine-free compound of magnesium, an organic oxide as a carrier, a C₁-C₈-alkanol and an electron donor compound by a method in which,
in a first stage, a solution of the chlorine-free compound of magnesium in an inert solvent is added to the inorganic oxide as a carrier, this mixture is allowed to react for from 0.5 to 5 hours at from 10 to 120°C and then reacted, at from -20 to 80°C with constant mixing, with a C₁-C₈-alkanol in at least a 1.3-fold molar excess, based on the compound of magnesium, to give a chlorine-free intermediate, the titanium halide and the electron donor compound are then added to said intermediate, the resulting mixture is allowed to react for at least 10 minutes at from 10 to 150°C and the solid substance thus obtained is then filtered off and washed and
in a second stage, the solid obtained from the first stage is extracted in an inert solvent containing at least 5 % by weight of titanium tetrachloride and is washed with a liquid alkane,
and, as cocatalysts,
b) an aluminum compound and
c) a further electron donor compound,
the molar ratio of the aluminum compound b) to the further electron donor compound c) in the polymerization being from 1.5 : 1 to 9 : 1.

2. A process for the preparation of propylene homopolymers as claimed in claim 1, wherein the molar ratio of the aluminum compound b) to the further electron donor compound c) is from 2 : 1 to 8 : 1.

3. A process for the preparation of propylene homopolymers as claimed in claim 1 or 2, wherein ethanol is used as a C₁-C₈-alkanol in the preparation of the titanium-containing solid component a) in the first stage.

4. A process for the preparation of propylene homopolymers as claimed in any of claims 1 to 3, wherein a di-C₁-C₁₀-alkylmagnesium is used as the chlorine-free compound of magnesium in the preparation of the titanium-containing solid component a).

5. A process for the preparation of propylene homopolymers as claimed in any of claims 1 to 4, wherein an inorganic oxide which has a pH of from 1 to 6.5, a mean particle diameter of from 5 to 200 µm and cavities or channels having a mean diameter of from 1 to 20 µm and whose macroscopic volume fraction, based on the total particle, is from 5 to 30 %, is used as a carrier in the preparation of the titanium-containing solid component a).

6. A process for the preparation of propylene homopolymers as claimed in any of claims 1 to 5, wherein a spray-dried inorganic oxide is used in the preparation of the titanium-containing solid component a).

7. A process for the preparation of propylene homopolymers as claimed in any of claims 1 to 6, wherein silica gel is used as the inorganic oxide in the preparation of the titanium-containing solid component a).

8. A process for the preparation of propylene homopolymers as claimed in any of claims 1 to 7, wherein a trialkylaluminum compound whose alkyl groups are each of 1 to 8 carbon atoms is used as the aluminum compound b).

9. A process for the preparation of propylene homopolymers as claimed in any of claims 1 to 8, wherein at least one organosilicon compound of the formula (I)
R¹ ₙSi(OR²)₄₋ₙ (I)
where the radicals R¹ are identical or different and are each C₁-C₂₀-alkyl, 5- to 7-membered cycloalkyl, which in turn may be substituted by C₁-C₁₀-alkyl, or are C₆-C₂₈-aryl or C₆-C₁₈-aryl-C₁-C₁₀-alkyl, the radicals R² are identical or different and are each C₁-C₂₀-alkyl and n is 1, 2 or 3, is used as the further electron donor compound c).

## Revendications

1. Procédé de préparation d'homopolymères du propylène par polymérisation de propylène à des températures de 20 à 150°C et sous des pressions de 1 à 100 bar en présence d'un système catalyseur de Ziegler-Natta, contenant en tant que constituants actifs
a) un composant solide contenant du titane, qui est obtenu par réaction d'un halogénure de titane avec un composé sans chlore du magnésium, avec un oxyde inorganique servant de support, un alcanol en C₁ à C₈ et un composé donneur d'électrons, réaction dans laquelle
dans une première étape, on ajoute à l'oxyde inorganique servant de support une solution, dans un solvant inerte, du composé sans chlore du magnésium, on laisse alors réagir ce mélange pendant 0,5 à 5 heures à une température de 10 à 120°C, puis, à une température de -20 à 80°C, sous agitation constante, on le fait réagir avec un alcanol en C₁ à C₈, selon un excès molaire d'au moins 1,3 par rapport au composé du magnésium, pour obtenir un produit intermédiaire sans chlore, puis on ajoute à ce dernier l'halogénure de titane et le composé donneur d'électrons, on laisse réagir pendant au moins 10 minutes à une température de 10 à 150°C le mélange obtenu, puis on isole par filtration la matière solide ainsi obtenue, on la lave, et
dans une deuxième étape, on extrait la matière solide obtenue dans la première étape, dans un solvant contenant au moins 5 % en poids de tétrachlorure de titane, et on le lave avec un alcane liquide,
et, en tant que co-catalyseurs
b) un composé de l'aluminium, et
c) un autre composé donneur d'électrons,
ce à l'occasion de quoi, lors de la polymérisation, on ajuste le rapport en moles du composé de l'aluminium b) à l'autre composé donneur d'électrons c) à une valeur de 1,5:1 à 9:1.

2. Procédé de préparation d'homopolymères du propylène selon la revendication 1, **caractérisé en ce qu'**on ajuste à une valeur de 2:1 à 8:1 le rapport en moles du composé de l'aluminium b) à l'autre composé donneur d'électrons c).

3. Procédé de préparation d'homopolymères du propylène selon la revendication 1 ou 2, **caractérisé en ce que**, lors de la préparation du composant solide a) contenant du titane, on utilise dans la première étape de l'éthanol en tant qu'alcanol en C₁ à C₈.

4. Procédé de préparation d'homopolymères du propylène selon les revendications 1 à 3, **caractérisé en ce que**, lors de la préparation du composant solide a) contenant du titane, on utilise en tant que composé sans chlore du magnésium un di(alkyle en C₁-C₁₀)magnésium.

5. Procédé de préparation d'homopolymères du propylène selon les revendications 1 à 4, **caractérisé en ce que**, lors de la préparation du composant solide a) contenant du titane, on utilise en tant que support un oxyde inorganique qui a un pH de 1 à 6,5, une granulométrie moyenne de 5 à 200 µm, et des espaces creux ou des canaux ayant un diamètre moyen de 1 à 20 µm, dont la proportion macroscopique en volume, par rapport à la totalité des particules, est comprise entre 5 et 30 %.

6. Procédé de préparation d'homopolymères du propylène selon les revendications 1 à 5, **caractérisé en ce que**, lors de la préparation du composant solide a) contenant du titane, on utilise un oxyde inorganique séché par atomisation.

7. Procédé de préparation d'homopolymères du propylène selon les revendications 1 à 6, **caractérisé en ce que**, lors de la préparation du composant solide a) contenant du titane, l'oxyde inorganique utilisé est un gel de silice.

8. Procédé de préparation d'homopolymères du propylène selon les revendications 1 à 7, **caractérisé en ce qu'**on utilise en tant que composé de l'aluminium b) un composé trialkylaluminium dont chacun des groupes alkyle a de 1 à 8 atomes de carbone.

9. Procédé de préparation d'homopolymères du propylène selon les revendications 1 à 8, **caractérisé en ce qu'**on utilise en tant qu'autre composé donneur d'électrons c) au moins un composé organique du silicium de formule générale (I)
R¹ ₙSi(OR²)₄₋ₙ (I)
dans laquelle les radicaux R¹ sont identiques ou différents et représentent chacun un groupe alkyle en C₁ à C₂₀, un groupe cycloalkyle ayant de 5 à 7 chaînons, qui pour sa part peut être substitué par des substituants alkyle en C₁-C₁₀, un groupe aryle en C₆ à C₂₈ ou un groupe (aryle en C₆-C₁₈)(alkyle en C₁-C₁₀), les radicaux R² sont identiques ou différents et représentent un groupe alkyle en C₁ à C₂₀, et n représente les nombres 1, 2 ou 3.
